# EUROPEAN PATENT SPECIFICATION

(11) **EP 0 926 758 B1**
(45) Date of publication and mention of the grant of the patent: **22.10.2003**
(21) Application number: 98124421.3
(22) Date of filing: 22.12.1998
(51) Int. Cl.: H01M 10/30, H01M 10/34, H01M 4/52, H01M 10/44

(54) **Nickel-metal hydride storage battery for back-up power source**
Nickel-Metalhydrid Speicherbatterie für Hilfsstromversorgung
Accumulateur nickel-hydrure de métal comme source d'énergie auxilliaire

(30) Priority: 26.12.1997 JP 35960897; 19.01.1998 JP 727398; 10.03.1998 JP 5778798; 28.09.1998 JP 27336998
(43) Date of publication of application: 30.06.1999
(73) Proprietor: MATSUSHITA ELECTRIC INDUSTRIAL CO., LTD., Kadoma-shi, Osaka 571-8501 (JP)
(72) Inventor: Kasahara, Hideki, Naka-gun, Kanagawa, Pref., 255-0005 (JP); Yao, Takeshi, Fujisawa City, 252-0815 (JP); Suzuki, Tatsuhiko, Kamakura City, 247-0073 (JP); Masui, Motohide, Chigasaki City, 253-0006 (JP); Konishi, Hajime, Ikoma City, 630-0041 (JP)
(74) Representative: Jung HML Pantentanwälte

(56) References cited:
- EP-A- 0 284 333
- EP-A- 0 723 305
- EP-A- 0 776 057
- EP-A- 0 794 584
- EP-A- 0 834 951
- EP-A- 0 869 565
- US-A- 5 807 643
- PATENT ABSTRACTS OF JAPAN vol. 012, no. 474 (E-692), 12 December 1988 & JP 63 193466 A (SANYO ELECTRIC CO LTD), 10 August 1988
- PATENT ABSTRACTS OF JAPAN vol. 017, no. 646 (E-1467), 30 November 1993 & JP 05 211069 A (MATSUSHITA ELECTRIC IND CO LTD), 20 August 1993
- PATENT ABSTRACTS OF JAPAN vol. 016, no. 453 (E-1267), 21 September 1992 & JP 04 160763 A (TOSHIBA BATTERY CO LTD;OTHERS: 01), 4 June 1992
- PATENT ABSTRACTS OF JAPAN vol. 098, no. 014, 31 December 1998 & JP 10 255833 A (HITACHI MAXELL LTD), 25 September 1998
- PATENT ABSTRACTS OF JAPAN vol. 016, no. 120 (E-1182), 26 March 1992 & JP 03 289059 A (SANYO ELECTRIC CO LTD), 19 December 1991

## Description

### BACKGROUND OF THE INVENTION

The present invention relates to a nickel-metal hydride storage batteries to be applied to back-up power sources for maintaining, in place of main power sources, operating states or conditions of electric appliances such as a guidance light (taxing guidance light), an emergency light, an information telecommunication system and the like at an emergency such as unforeseen power failure.

The nickel-metal hydride storage batteries which employ a hydrogen storage alloy capable of absorbing and desorbing hydrogen in a reversible manner as a negative electrode material have been popularized as the power sources for telecommunication apparatuses, computers, video recording apparatuses and the like, in place of nickel-cadmium batteries, since they can be sealed and have a higher energy density than the nickel-cadmium storage batteries.

In recent years, there is an increasing demand for an application of the nickel-metal hydride storage batteries in the back-up power sources for guidance lights, emergency lights, information telecommunication systems and the like, where the nickel-cadmium storage batteries has since been used, in order to design the small-sized appliances and to decrease a harmful influence to the environment.

Although the nickel metal-hydride storage batteries have since been widely used as the main power sources for cordless appliances such as telecommunication apparatuses, computers and video recording appliances, they have not been used as the back-up power sources. This is because there was no suitable battery design and no charging method of the nickel metal-hydride storage batteries as the back-up power sources which must stand by in a state of constantly maintaining their discharge capacities sufficient for irregular discharging.

For the conventional back-up power sources using the nickel-cadmium storage batteries, so-called trickle charge has been employed, whereby the batteries are constantly supplied with a minute charging current. According to the trickle charge, the batteries are constantly maintained to the fully charged states. However, in a case of subjecting the nickel-metal hydride storage batteries to the trickle charge, the discharge capacity of the battery decreases seriously, and it is impossible to maintain a satisfactory discharge capacity for a long-term.

Such decrease in battery capacities is due to the proceedings of oxidation of the hydrogen storage alloy contained in the negative electrodes, facilitated by bringing the batteries into the overcharged state during the trickle charge. That is, the oxidation of the hydrogen storage alloy causes an increase in internal resistance of the batteries due to the decrease in hydrogen storaging ability of the alloy and consumption of the electrolyte.

As a suitable charging method for the back-up power sources using the nickel-metal hydride storage batteries, an intermittent charge has been proposed in, for instance, Japanese Unexamined Patent Publication No. Hei 9-117074 or Proceedings of the 1997 communications society conference of IEICE (Proceedings II, page 531). The intermittent charge is a method of maintain a battery in nearly full-charged state by charging the battery intermittently to compensate the self-discharge quantity of the battery during the last idle period or the last quiescence in the charging.

According to the intermittent charge, oxidation of the hydrogen storage alloy can be suppressed in comparison with the trickle charge. However, there has been required a further improvement in long-term reliability of the nickel-metal hydride battery as the back-up power source.

The primary object of the present invention is to solve the above-mentioned problems and to provide a back-up power source which is capable of maintaining the discharge capacity of the nick-metal hydride storage battery for a long term and is suitable for the back-up power source of the guidance lights, the emergency lights, the information telecommunication systems and the like.

### BRIEF SUMMARY OF THE INVENTION

The present invention provides a nickel metal-hydride storage battery for back-up power source to be subjected to an intermittent charge comprising: at least one positive electrode consisting mainly of nickel hydroxide; at least one negative electrode consisting mainly of a hydrogen storage alloy powder; at least one separator; and an alkaline electrolyte, characterized in that a theoretical electric capacity ratio of said positive electrode to said negative electrode is from 1:1.5 to 1:2.0, and an amount of said alkaline electrolyte is from 1.7 g to 3.5 g per 1 Ah of the theoretical electric capacity of said positive electrode,
and said alkaline electrolyte contains potassium hydroxide and sodium hydroxide at a total molar concentration of from 7 to 10 mol/L, and the molar ratio of the potassium hydroxide to the sodium hydroxide is 1:1 to 1:4.

In a preferred embodiment the invention provides a nickel metal-hydride storage battery for back-up power source, which is characterized in that the charging in said intermittent charge is controlled under a system selected from the group consisting of the -Δv control system, the dT/dt control system and the timer control system.

In a further preferred embodiment the nickel metal-hydride storage battery for back-up power source is characterized in that said positive electrode contains, as an additive, at least one of an yttrium metal powder and an yttrium oxide powder.

In a still further preferred embodiment the nickel metal-hydride storage battery for back-up power source is characterized in that an amount of said additive is from 0.1 to 5 parts by weight for 100 parts by weight of said nickel hydroxide.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a characteristic diagram showing relationships between charge/discharge cycles and the capacity maintenance rates of the batteries.

FIG. 2 is a characteristic diagram showing relationships between charge/discharge cycles and internal resistances of the batteries.

FIG. 3 is a characteristic diagram showing relationships between the continuous charging duration and the internal resistances of the batteries under an atmosphere of 65°C.

FIG. 4 is a characteristic diagram showing relationships between the continuous charging duration and the internal resistances of the batteries under an atmosphere of 65°C.

FIG. 5 is a characteristic diagram showing relationships between the molar concentration of the alkaline electrolytes and utilization rates of the positive electrode active materials.

FIG. 6 is a characteristic diagram showing relationships between the molar concentration of potassium hydroxide to that of sodium hydroxide, and the utilization rate of the positive electrode active material as well as the charging efficiency at high temperatures.

FIG. 7 is a diagram showing a result of an accelerated cycle life test for a battery subjected to the intermittent charge in accordance with the present invention and of another battery subjected to the conventional trickle charge.

FIG. 8 is a diagram showing a result of the accelerated cycle life test for batteries, which indicates a relationship between a time for testing and a discharge capacity of the batteries.

### DESCRIPTION OF THE PREFERRED EMBODIMENT

In the following paragraphs, the preferred embodiments of the present invention will be described in detail.

### EXAMPLE 1

Three kinds of batteries listed in Table 1 below were assembled by varying the ratio of the theoretical electric capacity of the negative electrode to the theoretical electric capacity of the positive electrode, and the amount of the alkaline electrolyte for the theoretical electric capacity of the positive electrode. In Table 1, the nickel-metal hydride batteries No. 2 and No. 3 are comparative examples.

**Table 1**

| Battery No. | Theoretical capacity ratio of positive electrode/negative electrode | Amount of Electrolyte (g/Ah) |
|---|---|---|
| 1 | 1.7 | 2.5 |
| 2 | 1.7 | 1.6 |
| 3 | 1.3 | 2.5 |

These nickel-metal hydride storage batteries were produced in the following manner.

A paste prepared by compounding mainly of a nickel hydroxide powder and a cobalt compound powder as a conductive agent was filled in a substrate consisting of foamed nickel. The substrate filled with the paste was pressed to have a predetermined thickness and cut into a size for a battery of AA size, thereby to produce a positive electrode plate.

Separate from this, a paste consisting mainly of a hydrogen storage alloy powder was applied on both side faces of a perforated Ni-plated stainless steel sheet. After pressing the sheet to have a predetermined thickness, it was cut into the size for battery of AA size, thereby to produce a negative electrode plate.

After laminating the positive electrode plate with the negative electrode plate obtained in the above-mentioned manner, the laminated plates were wound up. together in a spiral fashion with a separator consisting of a nonwoven fabric of polypropylene interposed therebetween, thereby to produce an electrode group. The obtained electrode group was enclosed in a metal battery case.

An alkaline electrolyte was prepared by dissolving lithium hydroxide in an aqueous solution of potassium hydroxide of a concentration of 7.5 mol/L, at 1 mol/L. The alkaline electrolyte is such that has conventionally been used in the nickel-metal hydride storage battery for the telecommunication apparatuses and computers.

By injecting a predetermined amount of the alkaline electrolyte into the battery case and by closing the top end of the battery case with a sealing disk, a nickel-metal hydride storage battery of AA size having a nominal discharge capacity of 1,200 mAh was assembled.

The obtained battery was stood still under an atmosphere at 25°C for 12 hours. Then the battery was subjected to an activation of charging at a current of 0.1 CmA for 15 hours and discharging at a current of 0.2 CmA for 4 hours.

Each of Batteries No. 1 through No. 3 thus obtained was subjected to an intermitted charge test in the following mode.

A cycle of charging the battery under the -ΔV control system at a charging current of 1/2 CmA until a fully charged state with an idle period of one day was repeated. Herein, when a battery is stood still under an atmosphere at 25°C for one day, a self-discharge quantity of the battery is about 5% of the discharge capacity thereof. During the repetition, the respective batteries were discharged until their terminal voltages were dropped to 1.0 V for every 100 cycles so as to derive the discharge capacities.

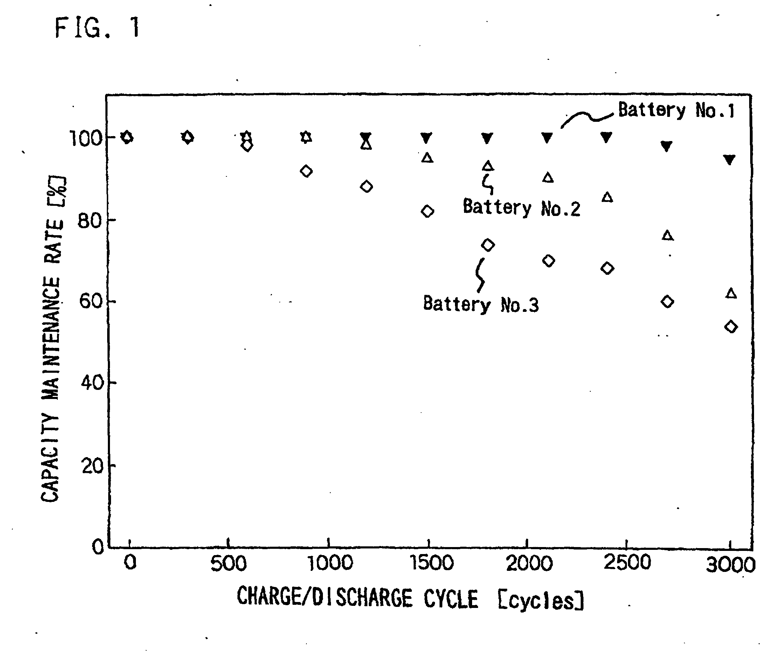

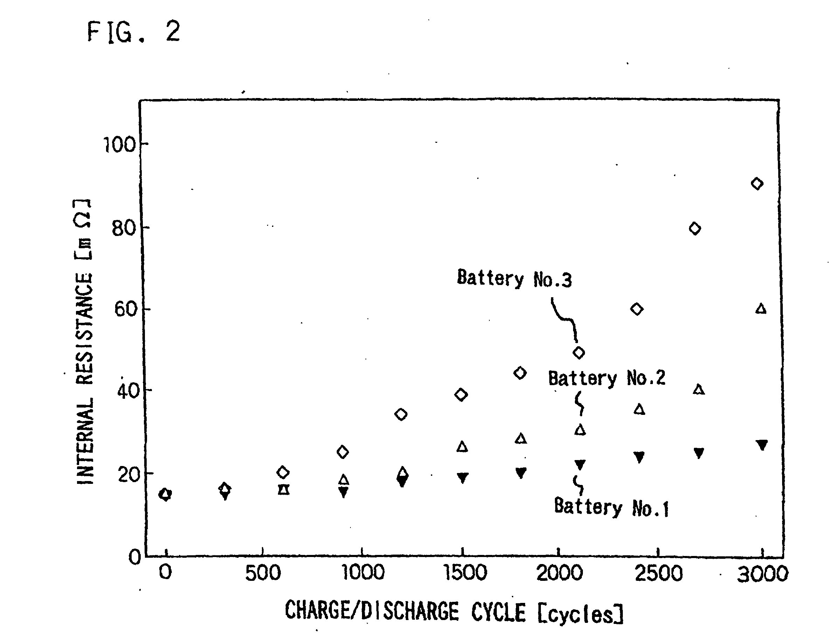

Changes in the capacity maintenance rates of the Batteries, i.e., the changes in the discharge capacities, and those in the internal resistances with the cycles of the intermittent charge are shown by the diagrams in FIG. 1 and FIG. 2, respectively.

As clearly shown in FIG. 1, Battery No. 1 demonstrates a high capacity maintenance rate for a long-term even when the charge/discharge cycles are repeated. As shown in FIG. 2, the internal resistance of Battery No. 1 remains to be low for along term. In contrast, the capacity maintenance rates of Batteries No. 2 and No. 3 decrease at an early stage of the cycles as compared with that of Battery No. 1, and the internal resistances increase. The deteriorations of these batteries proceed with the repetition of the charge/discharge cycle and become remarkable when the repetition is not less than 400 cycles in particular.

In the case of Battery No. 2, it is considered that the alkaline electrolyte was consumed by an oxidation reaction of the hydrogen storage alloy and its amount became insufficient, thereby to increase the internal resistance and to decrease the discharge capacity.

In the case of Battery No. 3, it is considered that the internal resistance increased by an oxidation of the hydrogen storage alloy and the discharge capacity of the negative electrode became insufficient, although the amount of the alkaline electrolyte has been sufficient.

Based on the above results, it is preferable for such a nickel-metal hydride storage battery that is subjected to the intermittent charge under the -ΔV control system for maintaining the discharge capacity of the battery, the theoretical electric-capacity ratio of the positive electrode to the negative electrode is preferably 1:1.5 - 1:2.0. Further, it is preferable to set the amount of the alkaline electrolyte to 1.7 - 3.5 g per 1 Ah of the theoretical electric capacity of the positive electrode.

In another case of performing the intermittent charge under the dT/dt control system which is a temperature control system or the timer control system in place of the -ΔV control system, substantially the same result is obtained.

### EXAMPLE 2

An ingot of a hydrogen storage alloy whose composition is represented by the formula: MmNi_{3.35}Mn_{0.4}Al_{0.3}Co_{0.75} was mechanically pulverized to give a powder having an average particle diameter of 30 µm.

This powder was thrown into an alkaline aqueous solution containing lithium hydroxide at 4 mol/L at 80°C and stirred for 60 minutes. After separating from the aqueous solution, this powder was washed with water and dried. The obtained hydrogen storage alloy powder is named as Powder "C".

As comparative examples, Powders "D" through "F" were prepared as follows.

The alloy powder having the same composition was subjected to a similar treatment by using an aqueous solution of potassium hydroxide of a concentration of 4 mol/L in place of the aqueous solution of lithium hydroxide. The obtained hydrogen storage alloy powder is named as Powder D. The alloy powder having the same composition was subjected to a similar treatment by using an aqueous solution of sodium hydroxide of a concentration of 4 mol/L. The obtained hydrogen storage alloy powder is named as Powder E. The alloy powder without being subjected to any treatment with an aqueous alkaline solution is named as Powder F.

After standing these hydrogen storage alloy powders C through F still under a magnetic field of 7,96·10⁵ A/m (10 kOe) at a temperature of not higher than 20°C, magnetization rates of the stood alloy powders per unit weight were measured. The results of the measurements are listed in Table 2.

**Table 2**

| Alloy Powder | Treatment with Aqueous solution | Concentration of Alkali | Magnetization of the Alloy (emu/g) |
|---|---|---|---|
| C | lithium hydroxide | 4 mol/L | 2.8 |
| D | potassium hydroxide | 4 mol/L | 1.1 |
| E | sodium hydroxide | 4 mol/L | 1.0 |
| F | None | -- | 0.1 |

As clearly shown in Table 2, the magnetization rate of the alloy increases by immersing the alloy in an aqueous alkaline solution. It is considered that the increase in magnetization rate is due to an oxidation of misch metal or manganese in the alloy by the aqueous alkaline solution and a formation of single phase of nickel or cobalt which constitutes these alloy.

As clearly shown in Table 2, the hydrogen storage alloy treated with the lithium hydroxide aqueous solution demonstrates a higher magnetization rate as compared with the hydrogen storage alloy treated with the aqueous solution of potassium hydroxide or that of sodium hydroxide. On the basis of the fact, it is considered that lithium hydroxide further promotes the oxidation reaction of the misch metal or manganese in the hydrogen storage alloy.

By an addition of lithium hydroxide to the alkaline electrolyte, it becomes possible to stably derive an excellent discharge characteristic of the battery at the early stage. However, if lithium hydroxide exists in the alkaline electrolyte, the oxidation of the hydrogen storage alloy gradually proceeds, thereby to decrease the hydrogen storaging ability of the alloy and to further consume the alkaline electrolyte. As the back-up power source, not only to have an excellent early stage performance, the battery is also required to maintain the performance for a long term.

In the following few paragraphs, a description will be made on the battery performance with reference to some specific examples.

Nickel-metal hydride storage batteries similar to those in Example 1 were assembled by using alkaline electrolytes of different species.

A battery assembled by using an alkaline electrolyte prepared by dissolving lithium hydroxide in an aqueous solution of potassium hydroxide having a concentration of 7.5 mol/L at 1 mol/L which had conventionally been used in the nickel-metal hydride storage battery for the telecommunication apparatuses and computers is named as Battery "P" of the comparative example. Another battery was assembled in a similar manner by using an alkaline electrolyte prepared by dissolving lithium hydroxide in an aqueous solution of sodium hydroxide having a concentration of 7.5 mol/L at 1 mol/L. This battery is named as Battery "Q" of the comparative example. Still another battery was assembled by using an alkaline electrolyte containing only potassium hydroxide having a concentration of 8.5 mol/L. This battery is named as Battery "R". Another battery was also assembled by using an alkaline electrolyte containing only sodium hydroxide having a concentration of 8.5 mol/L. This battery is named as Battery "S".

After standing these Batteries P through S still under an atmosphere at 25°C for 12 hours, they were subjected to a charge/discharge (charging at a current of 0.1 CmA for 15 hours, and discharging at a current of 0.2 CmA for 4 hours), as an initial activation.

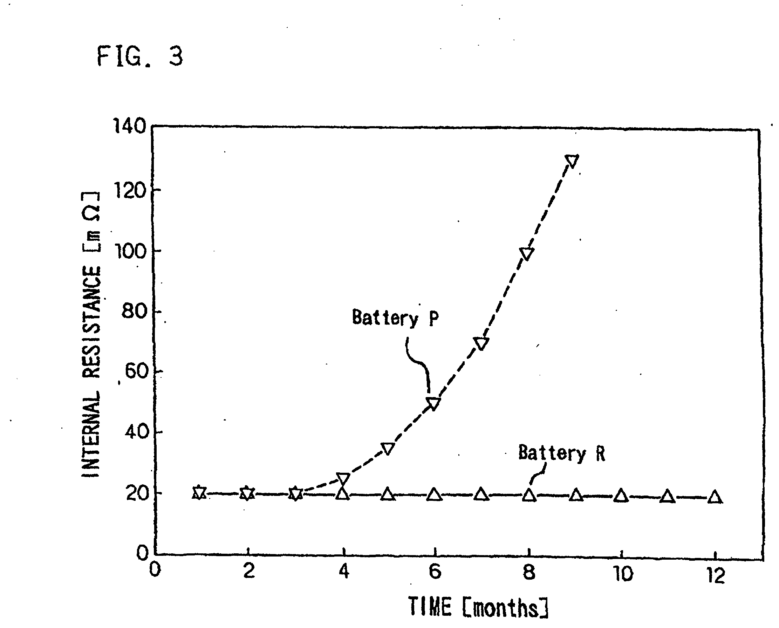

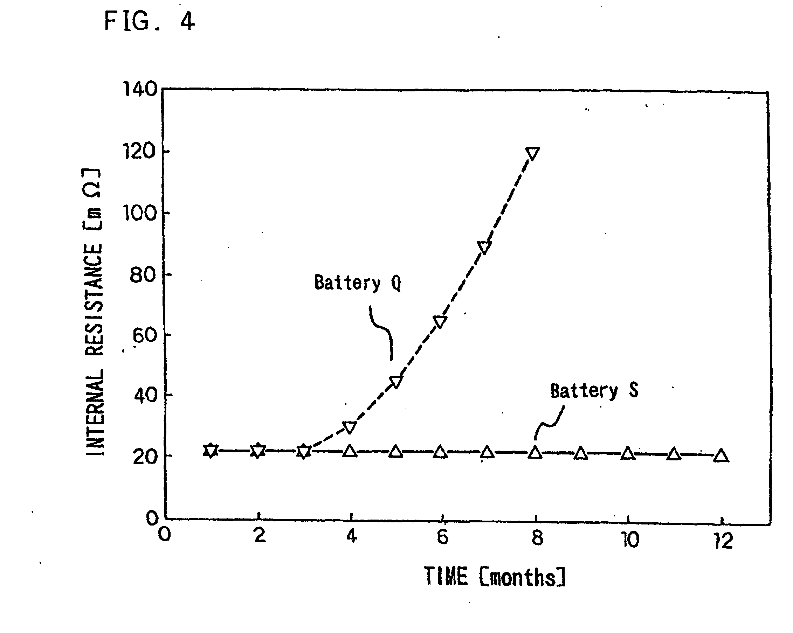

Batteries P, Q, R and S were then subjected to an accelerated reliability test designed for the nickel-metal hydride storage battery for back-up power source, whereby an increases in internal resistance of the batteries were examined during a continuous charging at a charging current of 0.2 CmA under an atmosphere at 65°C. The result thereof are shown by the diagrams in FIG. 3 and FIG. 4.

As clearly shown in FIG. 3 and FIG. 4, it is recognized that Batteries R and S employing the alkaline electrolytes not including lithium hydroxide maintain their low internal resistances for a long term, and thus have a high reliability as the battery for back-up power source. In contrast, the internal resistances of Batteries P and Q with the alkaline electrolytes containing lithium hydroxide increase with the progress of the charging. As previously described, this is due to the oxidation of the hydrogen storage alloy by the lithium hydroxide in the electrolyte and consumption of the alkaline electrolyte during the oxidation reaction.

In order to derive charging efficiency at a high temperature of Batteries P, Q, R and S, they were charged at a current of 0.1 CmA under an atmosphere of 20 °C for 15 hours and then discharged at a discharge current of 0.2 CmA. In a similar manner, these batteries were charged and discharged under an atmosphere of 55°C. The results thereof are listed in Table 3 below. Herein, the utilization rate of the positive electrode active material in the table is a ratio of actual capacity obtained by discharging the batteries under the atmosphere of 20°C to the theoretical capacity of nickel hydroxide at the same temperature, and the high temperature charging efficiency is a ratio of the capacity obtained by discharging the batteries under the atmosphere of 55°C to the capacity obtained by discharging the batteries under the atmosphere of 20°C.

**Table 3**

| Battery | Alkaline electrolyte | Utilization rate | High temperature charging efficiency |
|---|---|---|---|
| P | Aqueous solution of KOH of 7.5 mol/L added with LiOH at 1 mol/L | 100% | 75% |
| Q | Aqueous solution of NaOH of 7.5 mol/L added with LiOH at 1 mol/L | 98% | 95% |
| R | Aqueous solution of 8.5 mol/L potassium hydroxide | 97% | 60% |
| S | Aqueous solution of 8.5 mol/L sodium hydroxide | 95% | 95% |

As clearly shown in Table 3, either of Batteries R and S employing the alkaline electrolytes with no addition of lithium hydroxide exhibits a lower utilization rate as compared with those of Batteries P and Q with the alkaline electrolytes containing lithium hydroxide. In addition, as has conventionally been disclosed, Battery R with the alkaline electrolyte containing.only potassium hydroxide demonstrates a low high-temperature charging efficiency. Since the batteries for back-up power sources are frequently used under a high temperature atmosphere due to the heat generated by an appliance used in combination with the batteries and an environment for the installation, their charging performance under a high temperature is very important.

Batteries P and Q are found to be inferior in their long-term reliability. Although Battery R demonstrates a high utilization rate, high-temperature charging efficiency thereof is low. Battery S demonstrates an excellent long-term reliability and a high high-temperature charging efficiency, but the utilization rate thereof is not satisfactory. Therefore, any of Batteries P through S cannot satisfy the performance required as the back-up power source.

In spite of the above-mentioned experimental results, it is still considered that the use of an alkaline electrolyte which does not contain lithium hydroxide but does contain potassium hydroxide and sodium hydroxide in a certain proportion can suppress the deterioration of the hydrogen storage alloy by oxidation and increase the high-temperature charging efficiency, while maintaining the utilization rate of the positive electrode active material to 100%, on the basis of the comparison of the performances of Batteries P through S.

Batteries were therefore configured by using the electrolyte containing potassium hydroxide and sodium hydroxide at different ratio and an investigation was conducted on their performances.

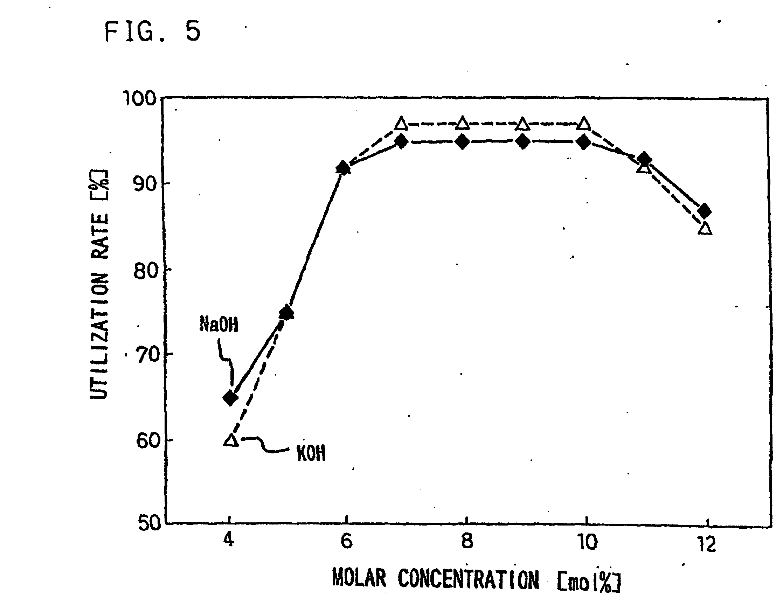

The relationship between the concentration of potassium hydroxide or that of sodium hydroxide and the utilization rate of the positive electrode active material is shown by the diagram in FIG. 5. As clearly shown in FIG. 5, in both cases of potassium hydroxide and sodium hydroxide, the utilization rate decreases at their concentrations of not more than 7 mol/L or not less than 10 mol/L. In the alkaline electrolyte containing potassium hydroxide or sodium hydroxide singly, it is therefore preferable to make the concentration to a range of 7 - 10 mol/L.

In addition, based on the fact that the battery with the alkaline electrolyte containing potassium hydroxide singly demonstrates a similar performance to the battery with the alkaline electrolyte containing sodium hydroxide singly, it is considered that the total concentration is preferably set to a range of 7 - 10 mol/L when the alkaline electrolyte containing potassium hydroxide and sodium hydroxide at a certain ratio.

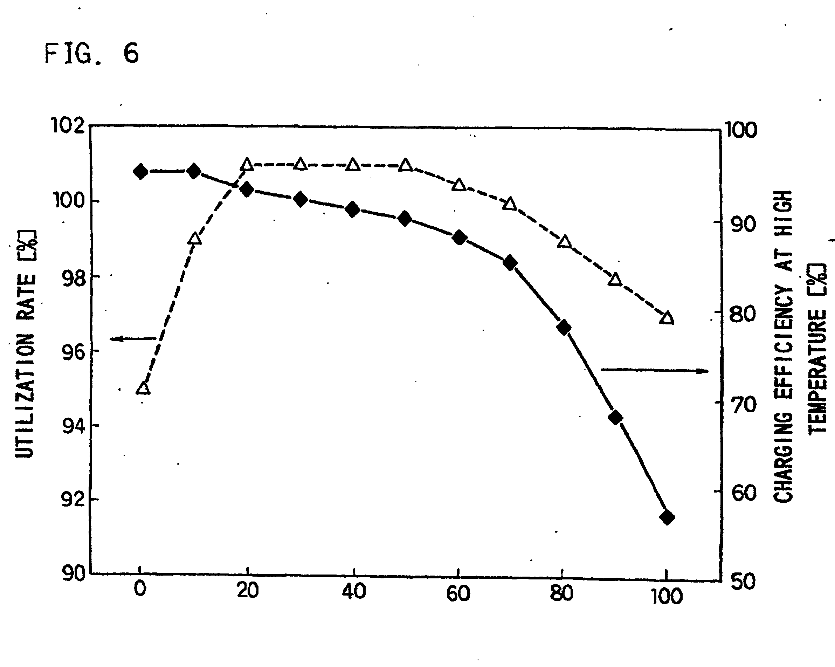

Next, batteries were therefore configured by using the electrolyte containing potassium hydroxide and sodium hydroxide in a total amount of 8.5 mol/L. The relationship between the concentration ratio of potassium hydroxide to sodium hydroxide in the electrolyte and the utilization rate of the positive electrode active material is shown by the diagram in FIG. 6. In addition, the relationship between the concentration ratio and the charging efficiency at high temperature is also shown by the diagram in FIG. 6.

As clearly shown in FIG. 6, it is recognized that the high-temperature charging efficiency is improved with the increase in the ratio of sodium hydroxide (i.e., decrease in the ratio of potassium hydroxide). However, the utilization rate of the positive electrode active material decreases abruptly when the ratio of potassium hydroxide reaches not less than 20%. Incidentally, any of the batteries with the alkaline electrolyte containing both of potassium hydroxide and sodium hydroxide however demonstrates a higher utilization rate as compared the batteries with the alkaline electrolyte containing one of these singly. In particular, by selecting the concentration ratio of potassium hydroxide to 20% to 50%, to the sodium hydroxide in the electrolyte, it is possible to realize an excellent high-temperature charging efficiency and a high utilization rate at the same time. Incidentally, a similar tendency is recognized by varying the total amount of potassium hydroxide and sodium hydroxide in the alkaline electrolyte in a range of 7 - 10 mol/L.

Subsequently, a nickel-metal hydride storage battery was configured by using the alkaline electrolyte containing potassium hydroxide and sodium hydroxide in 8.5 mol/L at the total amount and whose molar concentration ratio is 30% : 70% in a manner similar to Battery P. The battery is named as Battery "T".

Battery T was subjected to an intermittent charge test under a similar system to that used in Example 1 (Charging current of 1/2 CmA, Charge control of -ΔV= 5 mV/cell, Charge initiation voltage = 1.34 V, Atmospheric temperature: 65°C), and was evaluated as a back-up power source. During the intermittent charge, the battery was discharged until the terminal voltage thereof was dropped to 1.0 V/cell for every 6 months, to confirm the discharge capacity of the battery.

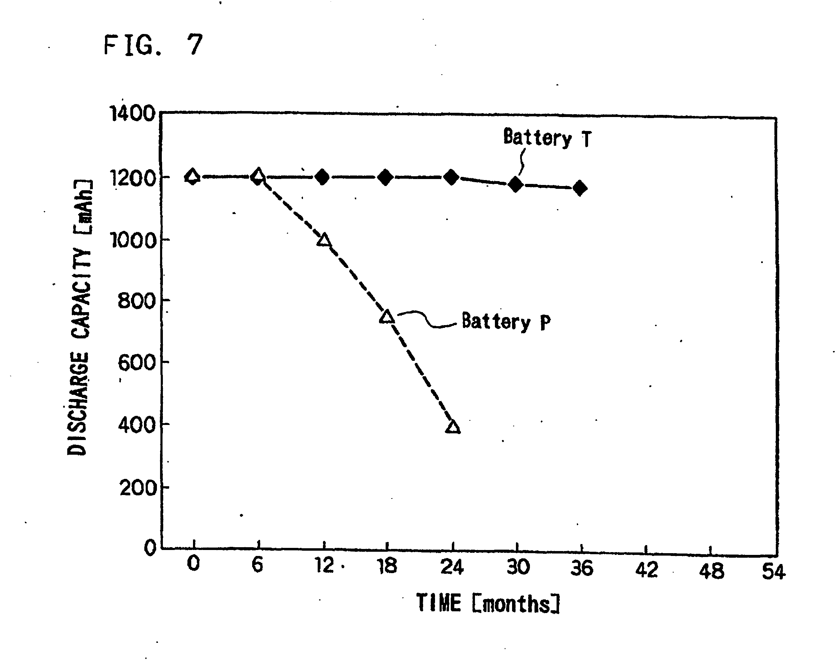

For comparative purpose, Battery P employing the alkaline electrolyte prepared by dissolving lithium hydroxide in an aqueous solution of potassium hydroxide of a concentration of 7.5 mol/L, at 1 mol/L which has conventionally been used was subjected to trickle charge (Charging current: 1/20 CmA, Atmospheric temperature: 65 °C) which is also the conventional charging system. The results thereof are shown in the diagram in FIG. 7.

As clearly shown by FIG. 7, when the conventional Battery P is charged under the conventional trickle charge system, it is deteriorated in 18 months, whereas when Battery T employing the electrolyte in accordance with the present invention is charged under the intermittent charge system, the discharge capacity which is almost identical with the initial discharge capacity is maintained after the lapse of 36 months.

As previously described, it is concluded that it is preferable, for a nickel-metal hydride storage battery for back-up power source, to use an alkaline electrolyte containing no lithium hydroxide which promotes the oxidation of the hydrogen storage alloy and to employ an intermittent charge system.

### EXAMPLE 3

A paste prepared by compounding mainly of nickel hydroxide powder and a cobalt compound as a conductive agent was filled in a substrate consisting of foamed nickel. The substrate filled with the paste was pressed to have a predetermined thickness and cut into a size for a battery of AA size, thereby to produce a positive electrode plate.

Separate from this, a paste comprising 100 parts by weight of nickel hydroxide powder and 3 parts by weight of yttrium oxide (Y₂O₃) was applied on both side faces of a perforated Ni-plated stainless steel sheet. After pressing the sheet to make it to have a predetermined thickness, it was cut into the size for the battery of AA size, thereby to produce a positive electrode plate.

The positive electrode plate and the negative electrode plate obtained in the above-mentioned manner were laminated with a separator made of a nonwoven fabric of polypropylene interposed therebetween. Then, the laminated sheets were wound up together in a spiral fashion, thereby to produce an electrode group. The obtained electrode group was enclosed in a metal battery case.

Next, a predetermined amount of an alkaline electrolyte (total molar concentration of 8.5 mol/L, molar concentration ratio of potassium hydroxide to sodium hydroxide of 30%:70%) which is similar to that used in Battery T of Example 2 was injected into the battery case and the top end of the battery case was closed with a sealing disk, thereby to assemble a nickel-metal hydride storage battery of AA size having a nominal discharge capacity of 1200 mAh. The battery is named as Battery "V".

Separate from this, another nickel-metal hydride storage battery was assembled in a similar manner by using a positive electrode plate configured similarly with another paste containing no yttrium oxide. This battery was named as Battery "U".

The batteries obtained in the above-mentioned manner were stood still at an atmospheric temperature of 25°C for 12 hours and then subjected to an initial charge/discharge (charging at a current of 0.1 CmA for 15 hours, and discharging at a current of 0.2 CmA for 4 hours) for their initial activation.

The results of the measurements on the utilization rate of the positive electrode active material and the high-temperature charging efficiency of Battery U and Battery V are listed in Table 4.

**Table 4**

| Battery | Positive electrode plate additives | Utilization rate of the positive electrode active material | High temperature charging efficiency |
|---|---|---|---|
| U | Cobalt hydroxide | 101% | 92% |
| V | Cobalt hydroxide and yttrium oxide | 101% | 96% |

As clearly shown by Table 4, Battery V employing the positive electrode added with yttrium oxide powder demonstrates a about 4% higher high-temperature charging efficiency than Battery U employing the positive electrode with no yttrium oxide powder.

This is because the charging reaction of converting nickel hydroxide into nickel oxyhidroxide sufficiently progresses since the added yttrium oxide powder adheres to the surface of the nickel hydroxide powder thereby rising an overvoltage for generating oxygen which is a competitive reaction of the charging under a high temperature atmosphere.

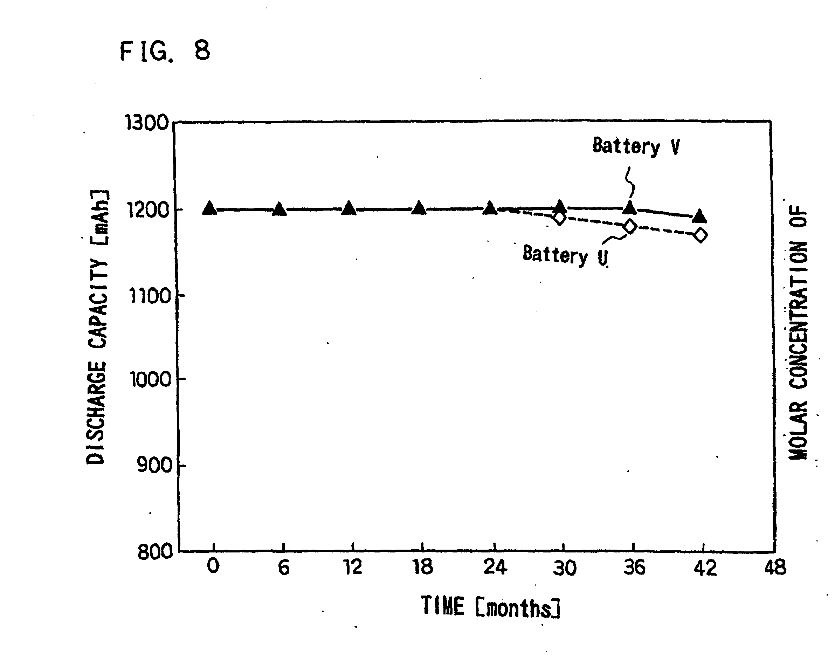

Battery U and Battery V were subjected to an intermittent charge test in a similar system to that used in Example 2 (Charging current of 1/2 CmA, Charge control with -ΔV= 5 mV/cell, Charge initiation voltage of 1.34 V, Atmospheric temperature of 65°C), as an accelerated cycle life evaluation test of the batteries for a back-up power source. During the intermittent charge, the batteries were discharged at a current of 0.2 CmA until their terminal voltages were dropped to 1.0 V/cell for every 6 months, to confirm the discharge capacities of the batteries. The results thereof are shown in the diagram in FIG. 8.

As clearly shown in FIG. 8, the both of Battery U and Battery V demonstrate almost no decrease in the discharge capacities even after the lapse of 42 months, but Battery V demonstrates a slightly higher capacity maintenance rate with the proceed of the time, as compared with Battery U.

By adding yttrium oxide powder to the positive electrode of the nickel-metal hydride storage battery for back-up power source and further subjecting the battery to an intermittent charge, the battery's characteristic of maintaining a discharge capacity at a high temperature is improved.

Herein, it is preferable to add 0.1 - 5 parts by weight of yttrium oxide to 100 parts by weight of nickel hydroxide contained in the positive electrode.

Further, a similar technical advantage is also obtained by adding yttrium metal powder or another oxide powder of yttrium in place of the yttrium oxide.

As previously described, according to the present invention, it is possible to provide a highly reliable nickel-metal hydride storage battery for back-up power source whose hydrogen storage alloy suffers only small deterioration at an intermittent charge and whose discharge capacity is maintained for a long-term.

It is understood that various other modifications will be apparent to and can be readily made by those skilled in the art without departing from the scope of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A nickel metal-hydride storage battery for back-up power source to be subjected to an intermittent charge comprising: at least one positive electrode consisting mainly of nickel hydroxide; at least one negative electrode consisting mainly of a hydrogen storage alloy powder; at least one separator; and an alkaline electrolyte, **characterized in that** a theoretical electric capacity ratio of said positive electrode to said negative electrode is from 1:1.5 to 1:2.0, and an amount of said alkaline electrolyte is from 1.7 g to 3.5 g per 1 Ah of the theoretical electric capacity of said positive electrode,
and said alkaline electrolyte contains potassium hydroxide and sodium hydroxide at a total molar concentration of from 7 to 10 mol/L, and the molar ratio of the potassium hydroxide to the sodium hydroxide is 1:1 to 1:4.

2. The nickel metal-hydride storage battery for back-up power source in accordance with claim 1, **characterized in that** the charging in said intermittent charge is controlled under a system selected from the group consisting of the -ΔV control system, the dT/dt control system and the timer control system.

3. The nickel metal-hydride storage battery for back-up power source in accordance with claim 1, **characterized in that** said positive electrode contains, as an additive, at least one of an yttrium metal powder and an yttrium oxide powder.

4. The nickel metal-hydride storage battery for back-up power source in accordance with claim 3, **characterized in that** an amount of said additive is from 0.1 to 5 parts by weight for 100 parts by weight of said nickel hydroxide.

## Patentansprüche

1. Eine Nickel-Metallhydrid-Speicherbatterie für eine Reserveenergiequelle, um einer intermittierenden Aufladung unterworfen zu werden, umfassend: mindestens eine positive Elektrode größtenteils bestehend aus Nickelhydroxid; mindestens eine negative Elektrode größtenteils bestehend aus einem Wasserstoffspeicherlegierungspulver; mindestens einen Separator; und einen alkalischen Elektrolyten, **dadurch gekennzeichnet, dass** ein theoretisches elektrisches Kapazitätsverhältnis von dieser positiven Elektrode zu dieser negativen Elektrode von 1 : 1,5 bis 1 : 2,0 beträgt, und eine Menge von diesem alkalischen Elektrolyten von 1,7 g bis 3,5 p pro 1 Ah der theoretischen elektrischen Kapazität von dieser positiven Elektrode beträgt, und dieser alkalische Elektrolyt enthält Kaliumhydroxid und Natriumhydroxid in einer absoluten molaren Konzentration von 7 bis 10 mol/l, und das molare Verhältnis von Kaliumhydroxid zu Natriumhydroxid beträgt 1 : 1 bis 1 : 4.

2. Die Nickel-Metallhydrid-Speicherbatterie für eine Reserveenergiequelle gemäß Anspruch 1, **dadurch gekennzeichnet, dass** das Aufladen bei dieser intermittierenden Aufladung unter der Kontrolle eines Systems steht, ausgewählt aus der Gruppe bestehend aus dem -ΔV Kontrollsystem, dem dT/dt Kontrollsystem und dem Timer-Kontrollsystem.

3. Die Nickel-Metallhydrid-Speicherbatterie für eine Reserveenergiequelle gemäß Anspruch 1, **dadurch gekennzeichnet, dass** diese positive Elektrode als ein Additiv mindestens ein Yttrium-Metallpulver und ein Yttriumoxid-Pulver enthält.

4. Die Nickel-Metallhydrid-Speicherbatterie für eine Reserveenergiequelle gemäß Anspruch 3, **dadurch gekennzeichnet, dass** dieses Additiv in einer Menge von 0,1 bis 5 Gewichtsteile pro 100 Gewichtsteile an Nickelhydroxid vorliegt.

## Revendications

1. Batterie d'accumulateurs nickel-hydrure métallique pour source d'énergie de réserve, destinée à être soumise à une charge intermittente, comprenant : au moins une électrode positive constituée principalement d'hydroxyde de nickel ; au moins une électrode négative constituée principalement d'une poudre d'un alliage de stockage d'hydrogène ; au moins un séparateur ; et un électrolyte alcalin, **caractérisée en ce que** le rapport de capacité électrique théorique de ladite électrode positive à ladite électrode négative est compris entre 1:1,5 et 1:2,0, et **en ce que** la quantité dudit électrolyte alcalin est comprise entre 1,7 g et 3,5 pour 1 Ah de la capacité électrique théorique de ladite électrode positive,
et **en ce que** ledit électrolyte alcalin contient de l'hydroxyde de potassium et de l'hydroxyde de sodium à une concentration molaire totale comprise entre 7 et 10 mol/L, et **en ce que** le rapport molaire de l'hydroxyde de potassium à l'hydroxyde de sodium est compris entre 1:1 et 1:4.

2. Batterie d'accumulateurs nickel-hydrure métallique pour source d'énergie de réserve selon la revendication 1, **caractérisée en ce que** la charge dans ladite charge intermittente est commandée selon un système appartenant au groupe constitué par le système de commande -Δv, le système de commande dT/dt et le système de commande par minuterie.

3. Batterie d'accumulateurs nickel-hydrure métallique pour source d'énergie de réserve selon la revendication 1, **caractérisée en ce que** ladite électrode positive contient comme additif au moins soit une poudre de métal yttrium, soit une poudre d'oxyde d'yttrium.

4. Batterie d'accumulateurs nickel-hydrure métallique pour source d'énergie de réserve selon la revendication 3, **caractérisée en ce que** la quantité dudit additif est comprise entre 0,1 et 5 parties en poids pour 100 parties en poids dudit hydroxyde de nickel.
